# EUROPEAN PATENT SPECIFICATION

(11) **EP 0 404 589 B1**
(45) Date of publication and mention of the grant of the patent: **11.09.1996**
(21) Application number: 90306842.7
(22) Date of filing: 22.06.1990
(51) Int. Cl.: G11B 17/04

(54) **Disc drive apparatus**
Plattenantriebsgerät
Appareil d'entraînement de disque

(30) Priority: 23.06.1989 JP 161952/89; 23.06.1989 JP 161953/89
(43) Date of publication of application: 27.12.1990
(73) Proprietor: SONY CORPORATION, Tokyo (JP)
(72) Inventor: Takamiya, Tooru, c/o Patents Division, Shinagawa-ku Tokyo 141 (JP); Miyoshi, Hiroshi, c/o Patents Division, Shinagawa-ku Tokyo 141 (JP); Ito, Osamu, c/o Patents Division, Shinagawa-ku Tokyo 141 (JP); Ohmori, Kiyoshi, c/o Patents Division, Shinagawa-ku Tokyo 141 (JP)
(74) Representative: Purvis, William Michael Cameron

(56) References cited:
- EP-A- 0 219 415
- EP-A- 0 250 111
- GB-A- 2 190 532
- US-A- 4 651 240
- US-A- 4 686 594
- US-A- 4 816 945
- US-A- 4 833 553
- PATENT ABSTRACTS OF JAPAN vol. 13, no. 397 (P-928)5 September 1989 & JP-A-01 143 064 ( SONY ) 5 June 1989

## Description

The present invention relates to a disc drive apparatus according to the preamble of claim 1.

Such apparatus may be used for example to drive a disc cartridge, such as a so-called micro-floppy disc cartridge which has a sliding shutter for closing a disc access opening.

Disc drive apparatus generally includes a chassis with a turntable, a cartridge holder which is movably arranged for movement toward and away from the chassis and a shutter operating pin to open and close a sliding shutter of a disc cartridge. When the disc cartridge is inserted into the cartridge holder i.e. is loaded, the shutter operating pin enters or engages with an operating pin cut-out formed in the shutter to cause opening sliding movement of the shutter.

The shutter operating pin is carried by a shutter operating arm which is pivotable both in a shutter opening direction and a shutter closing direction. The shutter operating arm is biased toward an initial position, i.e. the shutter closing direction, by means of a return spring. When the disc cartridge is inserted, the shutter operating pin engages in the operating pin cut-out. By further insertion of the disc cartridge displacement of the shutter operating pin engaging therewith is caused. The axial movement of the shutter operating pin necessarily causes pivotal movement of the shutter operating arm so as to cause lateral or transverse displacement of the shutter operating pin carrying the shutter. Therefore, by the end of the insertion motion of the disc cartridge, the shutter is moved to a fully opened position which permits access to the disc.

One example of the aforementioned type of previously proposed disc drive apparatus has been disclosed in Japanese Patent First (unexamined) Publication (Tokkai) Heisei 1-143064.

Such a construction of disc loading mechanism of disc apparatus is advantageous for simple construction and allows disc loading without requiring any drive power source. Furthermore, since the aforementioned construction is mechanically associated with the shutter operating mechanism, it can ensure the automatic shutter opening operation. On the other hand, the spring force of the return spring which is required resiliently to move the disc cartridge to the eject position upon unloading, is constantly exerted on the disc cartridge. This creates difficulty in accurately chucking the disc in the disc drive mechanism.

The spring force of the return spring has an especially undesirable effect if the disc loading mechanism includes a motor driven disc lifting mechanism for raising and lowering the cartridge holder between the disc loaded and unloaded positions. Thus, when the cartridge holder carrying the disc cartridge inserted thereinto moves from an unloaded position to a lowered loaded position, the motion of the disc cartridge cannot be restricted until the positioning pin engages the disc cartridge. As a result, the disc cartridge can be pushed backward to project from the disc cartridge receptacle mouth of the cartridge holder.

In order to solve this problem, there has been proposed an arm lock mechanism to lock the shutter operating arm during lifting operation of the disc lifting mechanism. The arm lock mechanism includes a lock rod provided for pivotal movement about a pivot shaft mounted on a lock base. The lock rod has a restricted angular range for pivotal motion and is biased by means of a spring. The arm lock mechanism becomes active when the cartridge holder approaches a position for initiation of operation of the disc lifting mechanism to shift the cartridge holder into the loading position, to engage the lock rod in a lock rod cut-out in the shutter operating arm to prevent the shutter operating arm from pivotally moving. By this means the spring force of the return spring is prevented from acting on the disc cartridge held in the cartridge holder.

However, since the shutter operating pin is provided on the cartridge holder and the arm lock mechanism is provided on the chassis, precise adjustment of the relative positions of the shutter operating pin and the arm lock mechanism becomes essential if the arm lock mechanism is to be constantly effective. Tolerance of the relative positions of the shutter operating pin and the arm lock mechanism may cause failure of the arm locking, or alternatively incomplete shutter opening.

Furthermore, in the aforementioned construction, since the disc cartridge per se is not locked on the cartridge holder, it is still possible to withdraw the disc cartridge even after the arm lock mechanism locks the shutter operating arm. Therefore, if the disc cartridge is withdrawn immediately after starting operation of the disc lifting mechanism, the disc cartridge will move to cause damage to the disc and/or the magnetic head.

Patent specification US-A-4833553 discloses a mechanism for loading and unloading disc cartridges wherein upon insertion of a cartridge a pin of a shutter lever engages the shutter of the cartridge to open the shutter and also engages in a cutout in the cartridge in a manner such that a spring biassing the shutter lever to a closed position exerts no force on the cartridge in the cartridge ejecting direction but locks the shutter lever. The cartridge is held in a holder during lowering and raising operations from a loading position to a turntable and back again without any ejecting force acting on the cartridge. A further lever is moved by abutment of the cartridge as the cartridge approaches a fully inserted position and is thereby released from a slider to permit movement of the slider. Return movement of the slider triggers ejection and outward movement of the cartridge releases the further lever to allow it to move and free the shutter lever for movement to release its pin from the cutout in the cartridge, thereby releasing the lock on the shutter lever and allowing it to rotate so that the shutter can close.

Patent Specification GB-A-2 190 532, which corresponds to the preamble of claim 1, discloses a latch with a latch hook portion and a latch cartridge holder spring loaded to effect retention of a cartridge in a loading unit when the cartridge is pressed thereinto.

According to the invention there is provided a disc drive apparatus to drive a recording medium disc housed within a disc cartridge having a disc access window and a sliding shutter openably closing the disc access window, comprising:
a disc drive mechanism including a disc chucking means to chuck the disc on a turntable rotatably to drive the disc, the disc driving mechanism being mounted on a chassis;
a cartridge holder to receive the disc cartridge and convey it between a predetermined unloaded position at which the disc cartridge is externally accessible for insertion and extraction and a loaded position;
a cartridge holder raising and lowering mechanism to shift the cartridge holder between the unloaded and the loaded positions;
a shutter operating means incorporated in the cartridge holder to shift the shutter between an open position in which the disc access opening is exposed for reading and/or writing information thereon, and a closed position in which the disc access window is blocked, the shutter operating means including a pivotal arm to move the shutter between the open and closed position according to the relative position of the disc cartridge and the cartridge holder;
an arm lock means incorporated in the cartridge holder to lock the pivotal arm at the position corresponding to the fully open position of the shutter; and
a cartridge lock means incorporated in the cartridge holder to lock the disc cartridge within the cartridge holder, the cartridge lock means being effective so to lock the disc cartridge when the disc cartridge is fully inserted within the cartridge holder;
characterised in that the cartridge lock means comprises a slide plate movable in the direction of motion of the disc cartridge within the cartridge holder and depending upon the relative position of the disc cartridge and the cartridge holder, and a pivotal lever carrying a cartridge locking pin, the pivotal lever cooperating with the slide plate to engage the cartridge locking pin into a locking pin cut-out in the disc cartridge at the fully inserted position of the disc cartridge.

In a preferred construction, the cartridge lock means may cooperate with the pivotal arm so that the pivotal arm can bias the cartridge lock means to the position where locking of the disc cartridge is established. Also, the disc drive apparatus may further comprise an arm lock releasing means which is provided on the chassis and acts on the arm lock means while the cartridge holder lifting means is active to shift the cartridge holder from the unloading position to the loading position, so that locking of the pivotal arm by the arm lock means is released at a position of the cartridge holder in the vicinity of the loading position.

The cartridge lock means may comprise a slide plate slidable in the direction of motion of the disc cartridge within the cartridge holder and depending upon the relative position of the disc cartridge and the cartridge holder, and a pivotal lever carrying a cartridge pin, the pivotal lever cooperating with the slide plate to engage the cartridge locking pin into a locking pin cut-out in the disc cartridge at the fully inserted position of the disc cartridge. In such case, the slide plate may cooperate with the pivotal arm of the shutter operating means to be biased to a position to establish locking engagement between the cartridge locking pin and the locking pin cut-out at the locked position of the pivotal arm by the arm lock means.

The invention is diagrammatically illustrated by way of example in the accompanying drawings, in which:-
Fig. 1 is a perspective view of one embodiment of a disc drive apparatus according to the invention;
Fig. 2 is an exploded perspective view of the disc drive apparatus shown in Fig. 1;
Fig. 3 is an enlarged and partially sectioned perspective view of the major part of the disc drive apparatus shown in Fig.1;
Fig. 4 is a plan view showing a cartridge lock mechanism in a cartridge lock mechanism in a cartridge unlocking position;
Fig. 5 is a similar plan view to Fig. 4 but showing the cartridge lock mechanism in a cartridge locking position;
Fig. 6 is a plan view of the disc drive apparatus shown in Fig. 1, in which an arm lock mechanism is in locking state;
Fig. 7 is a slide elevation showing the arm lock mechanism of Figure 6 in an arm locking state;
Fig. 8 is a plan view of the disc drive apparatus shown in Figure 1, showing the arm lock mechanism in a lock released state; and
Fig. 9 is a side elevation showing the arm lock mechanism of Figures 6 to 8 in an arm lock released state.

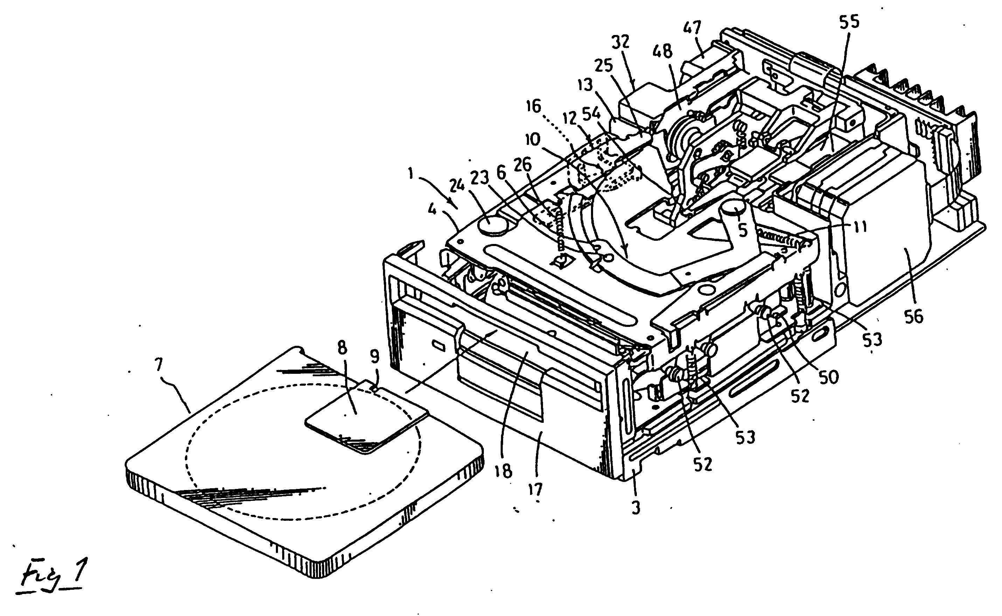

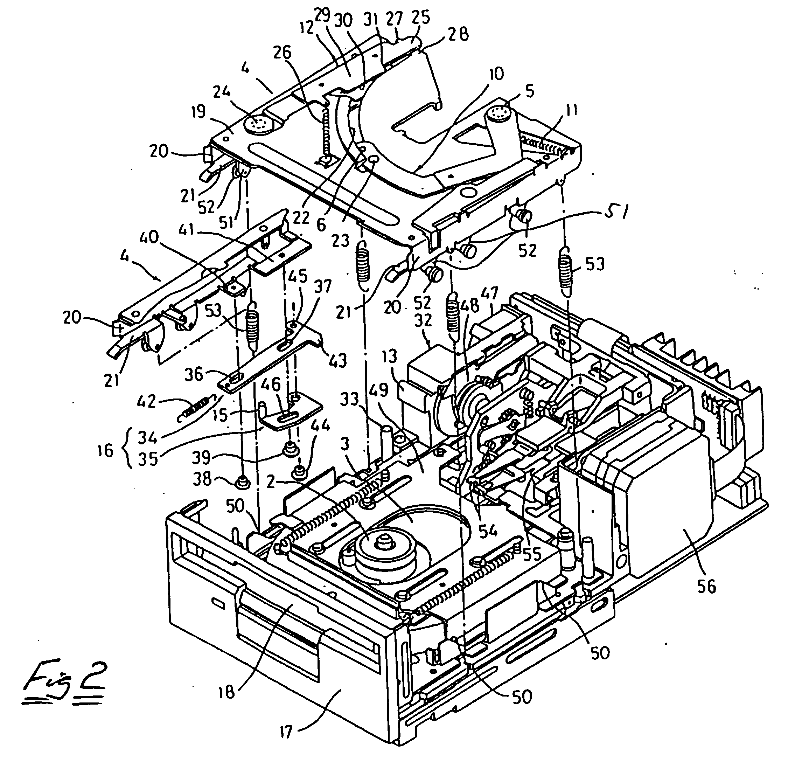

Referring to the drawings, and firstly to Figs. 1 and 2, disc drive apparatus 1 has a chassis 3 with a turntable 2. A cartridge holder 4 is positioned on the chassis 3 for movement forward and aft of the chassis. A shutter operating arm 10 is pivotally mounted on the cartridge holder 4 for pivotal movement about a pivot 5. The shutter operating arm 10 is associated with a return spring 11 which constantly biases the shutter operating arm toward an initial position corresponding to the fully closed position of a shutter 8 of a disc cartridge 7. The shutter operating arm 10 carries a shutter operating pin 6. The shutter operating pin 6 is so designed as to engage with an operating pin cut-out 9 of the shutter 8 of the disc cartridge 7. The shutter operating arm 10 is pivotally moved with the shutter operating pin 6 which engages with the pin cut-out 9 of the shutter 8 when the disc cartridge 7 is inserted into the cartridge holder 4. During insertion of the disc cartridge 7, the shutter operating pin 6 shifts in the direction of insertion of the disc cartridge according to forward movement thereof. This forward shifting of the shutter operating pin 6 causes pivotal movement of the shutter operating arm 10 against the spring force of the return spring 11. Pivotal movement of the shutter operating arm 10 naturally causes transverse displacement of the shutter operating pin 6 and therefore of the shutter 8. The magnitude of transverse displacement of the shutter operating pin 6 during insertion of the disc cartridge is so determined as fully to open the shutter adjacent the end of the insertion movement.

An arm lock member 12 is also provided on the cartridge holder 4. The arm lock member 12 is so designed as to lock the shutter operating arm 10 when the disc cartridge 7 is fully inserted to be shifted down to a predetermined loading position. The arm lock member 12 is associated with an arm lock release member 13 which is mounted on the chassis 3. The arm lock release member 13 is active at a predetermined cartridge holder position which is located between an unloading height position and a loaded height position. Therefore, during movement from the unloaded height position to the loaded height position, the arm lock established by the arm lock member 12 is released.

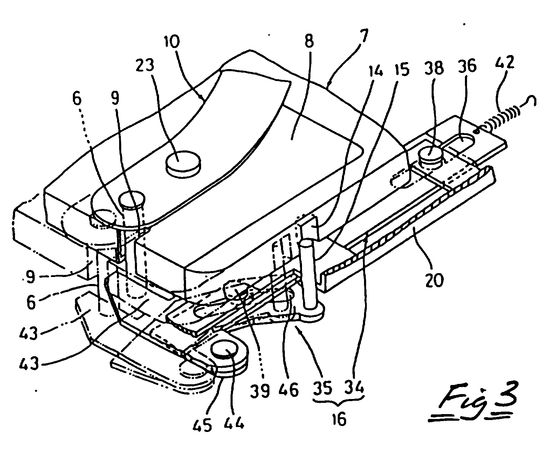

Since the disc cartridge per se is not locked on the cartridge holder, it is possible to withdraw the disc cartridge even after the arm lock mechanism locks the shutter operating arm 10. Therefore, if the disc cartridge is withdrawn immediately after the start of operation of a disc lifting mechanism, the disc cartridge will move causing damage to the disc and/or magnetic head. In order to prevent this, the embodiment of the disc drive apparatus shown is provided with a cartridge lock mechanism 16. As shown in Figs. 3 to 5, the cartridge holder lock mechanism 16 is incorporated in the cartridge holder 4 and includes a cartridge lock pin 15 which is engageable with a cartridge 7 to prevent the disc cartridge from loosing off. The cartridge lock mechanism 16 cooperates with the shutter operating arm 10 and is actuated thereby at the shutter fully open position to cause shifting of the cartridge lock pin 15 to enter into engagement with a cartridge pin cut-out 14 of the disc cartridge 7 within the cartridge holder 4.

The chassis 3 is formed of aluminium alloy and configurated into an essentially rectangular-shaped configuration. A front panel 17 is attached on the front end edge of the chassis 3. The front panel 17 defines a disc cartridge insertion slot 18. The cartridge holder 4 is placed in alignment with the disc cartridge insertion slot 18 while the disc is not loaded, so that the disc cartridge can be inserted into the cartridge holder.

The cartridge holder 4 is formed to an essentially rectangular box-shaped configuration by bending or pressing a metal plate. Therefore, the cartridge holder 4 has an upper plate section 19, a pair of side wall sections 20 extending essentially perpendicular to the upper plate section, and a pair of cartridge supporting strips 21 extending from ends of the side walls remote from the upper plate section in essentially parallel relationship with the upper plate section. With the upper plate section 19, the side walls 20 and the cartridge supporting strips 21, a cartridge receptacle space is defined. The cartridge holder 4 is mounted on the chassis 3 in movable fashion for movement forward and aft of the chassis between a disc unloaded position, in which the cartridge holder 4 is placed in alignment with the cartridge insertion slot 18 to permit insertion and extraction of the disc cartridge, and a disc loaded position, in which the cartridge holder 4 is shifted toward the chassis carrying the disc cartridge to load the disc.

The shutter operating arm 10 is formed into an essentially V- or U-shaped configuration and has one end pivotably connected to the upper plate section 19 of the cartridge holder 4 for pivotal movement about the pivot 5 as set forth above. The other end of the shutter operating arm 10 is engaged in an arc-shaped slot 22 formed through the upper plate section 19 of the cartridge holder so that the shutter operating arm can be pivotally moved through a predetermined angular range. The shutter operating pin 6 extends through the slot 22 for engagement with the pin receptacle cut-out 9 of the shutter 8 of the disc cartridge. An arm lock pin 23 is also carried by the shutter operating arm 10 and is active to engage with the arm lock member 12 to lock the shutter operating arm 10 at the shutter fully open position as set forth above.

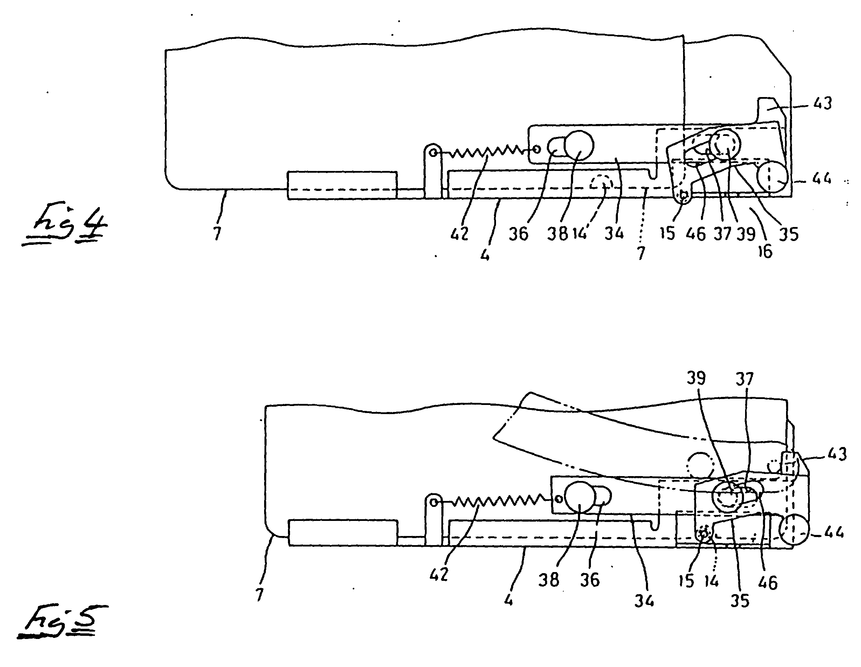

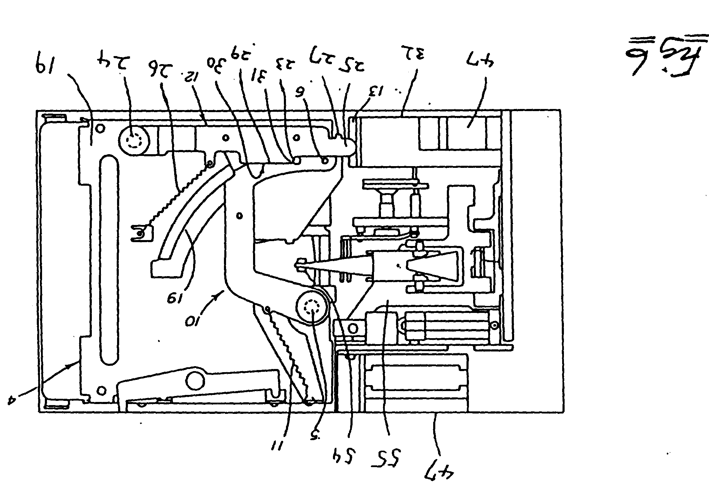

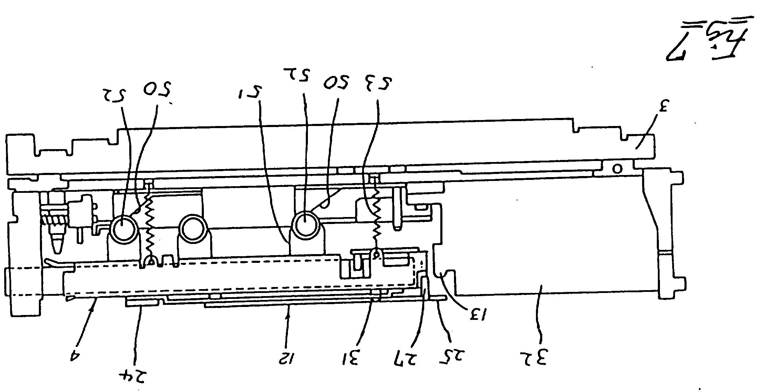

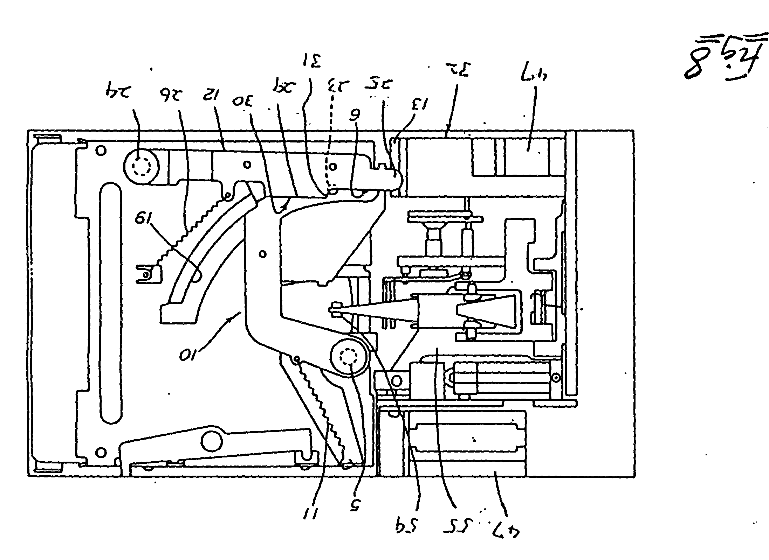

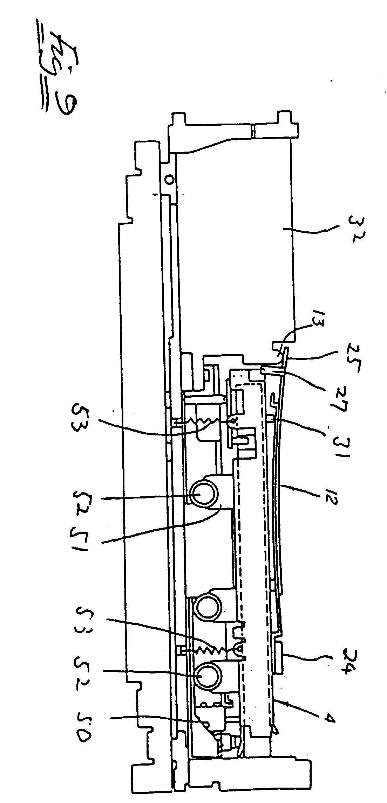

As shown in Figs. 6 to 9, the arm lock member 12 is provided along one side edge of the upper plate section 19 of the cartridge holder 4. The arm lock member 12 is formed of a resilient metal plate and formed into a generally rectangular configuration. The front end of the arm lock member 12 is pivotally connected to the upper plate section 19 of the cartridge holder 4 via a pivot 24. The arm lock member 12 has an extension tongue 25 at the rear end, i.e. the end remote from the front plate 17. The extension tongue 25 extends rearwardly from the rear end of the upper plate section 19 of the cartridge holder 4. The orientation of the extension tongue 25 corresponds to the planar orientation of the arm lock release member 13 on the chassis 3. Therefore, as the cartridge holder 4 carrying the disc cartridge 7 shifts from the unloading position to the loading position, the extension tongue 25 comes into contact with the arm lock release member 13 to cause upward and resilient deformation of the arm lock member 12 to release arm locking engagement between the arm lock pin 23 and the arm lock member. A stopper strip 27 extends from one side edge of the extension tongue 25. The stopper strip 27 cooperates with a stopper edge 28 of the cartridge holder 4 to restrict the angular range of pivotal movement of the arm lock member 12.

A coil spring 26 is provided to provide a bias force for the arm lock member 12. One end of the coil spring 26 is engaged by a spring rest extension integrally formed with the arm lock member 12. The other end of the coil spring 26 is connected to a spring rest bracket integrally formed with the upper plate section 19 of the cartridge holder. With this construction, the arm lock member 12 is normally biased toward the shutter operating arm 10. Pivotal movement of the arm lock member 12 as biased by the coil spring 26 is limited by the stopper strip 27 abutting against the stopper edge 28. At the angular position where the stopper strip 27 contacts with the stopper edge 28, the arm lock member 12 is placed in essentially parallel relationship with the side edge of the upper plate section 19 of the cartridge holder 4. At this position, an arm locking strip 29 formed integrally with the arm lock member 12 is oriented above the arc-shaped slot 22. When the disc cartridge 7 is inserted into the cartridge holder 4 to cause pivotal movement of the shutter operating arm 10, the arm lock pin 23 comes into contact with the side edge 30 of the arm locking strip 29 of the arm lock member 12. By this means, the arm lock member 12 is pivoted moved away from the shutter operating arm 10 against the spring force of the coil spring 26. This permits the shutter operating arm 10 to pivot further toward the shutter fully open position. At the end of pivotal movement of the shutter operating arm to reach the shutter fully open position, the arm lock pin 23 moves away from the side edge 30 to permit pivotal movement of the arm lock member 12 toward the shutter operating arm 10. As a result, a locking edge 31 of the arm locking strip 29 comes into engagement with the arm lock pin 23. Therefore, the shutter operating arm 10 is restricted to movement between the loading position and the unloading position.

Preferably the arm lock release member 13 is formed integrally with a motor housing 32 which is made of a synthetic resin. The height of the arm lock release member 13 is so designed that the arm lock release member 13 is maintained away from the extension tongue 25 of the arm lock member 12 when the cartridge holder 4 is maintained at the unloading position, that the arm lock release member 13 comes into contact with the extension tongue to cause movement during travel of the cartridge holder 4 from the unloading position to the loading position, and that the arm lock member 12 is moved in a magnitude sufficient to cause release of the stop edge 31 of the locking edge 29 from locking engagement with the arm lock pin 23 slightly before the cartridge holder reaches the loading position.

In the illustrated embodiment, the motor housing 32 houses a motor 47 to drive a cartridge holder lifting mechanism to lift the cartridge holder up and down between the unloading position and the loading position. The driving torque of the motor 47 is transmitted via a power train 48 to drive a lifter base plate 49 forward and backward. The lifter base plate 49 had a lifter guide extending generally perpendicular to the general surface thereof. The lifter guide has tapered cam faces 50 mating with rollers 52 which are supported on the supporting strips 21 of the cartridge holder 4 by means of mounting brackets 51. Thus, the lifter base plate 49 is initially placed at a backwardly shifted position to lift up the cartridge holder at the initial unloading position. When the disc cartridge is fully inserted, the motor 47 is driven to drive the lifter base plate forwardly to permit lowering of the cartridge holder 4 down to the disc loading position to assist a downward biasing force exerted by coil springs 53. By this means the magnetic disc housed within the disc cartridge 4 can be chucked on the turntable to be driven. Then, a magnetic head 54 carried by a head carriage 55 is radially shifted for tracking by means of a stepping motor 56.

At the loaded position, positioning pins 33 engage with positioning pin receptacle bores (not shown) of the disc cartridge 7 to position the disc cartridge 7 accurately on the turntable for accurate chucking.

As shown in Figs. 2 to 5, the cartridge lock mechanism 16 has a slide plate 34. The slide plate 34 cooperates with the shutter operating pin 6 on the shutter operating arm 10 so that it can be shifted rearwardly according to rearward movement of the shutter operating pin 6. A pivotal lever 35 carries the cartridge lock pin 15 and is associated with the slide plate 34 for pivotal movement according to rearward movement of the slide plate 34. By pivotal movement of the pivotal lever 35, the cartridge lock pin 15 is brought into engagement with the cartridge lock pin cut-out 14 of the disc cartridge 7 to lock the disc cartridge on the cartridge holder.

The slide plate 35 is formed of a metal place to a generally rectangular shaped configuration. The slide plate 34 is formed with a pair of elongate slide guide slots 36 and 37. Slide guide pins 38 and 39 extend through the slide guide slots 36 and 37. The slide guide pins 38 and 39 are supported on support strips 40 and 41 extending transversely from the cartridge support strip 21 by engaging fastening pin sections at the top thereof with through openings formed on the support strips 40 and 41. A coil spring 42 is provided to bias the slide plate 34 forwardly.

As can be clearly seen from Fig. 2, the slide plate 34 has a transversely extending jaw section 43. At the initial position, the slide 34 is so oriented as to place the jaw section 43 within the arc-shaped path of the shutter operating pin 6. Therefore, after a given angle of angular displacement according to insertion of the disc cartridge 7, the shutter operating pin 6 carrying the shutter 8 comes into engagement with the jaw section 43 of the slide plate 34 to cause sliding movement of the slide plate 34.

The pivotal lever 35 is also formed of a metal plate and oriented in overlapping fashion with the slide plate 34. The pivotal lever 35 has a transverse extension having a through opening. A connecting pin 44 extends through the through opening of the transverse extension and engages with an opening formed through a connecting strip 45 of the slide plate 34. An elongate opening 46 is formed in the mid portion of the pivotal lever 35 and receives the slide guide pin 39.

As shown in Fig. 4, when the slide plate 34 is in the initial and unlocking position, the slide guide pin 39 is located at the end of the elongate opening 46 adjacent the pin 44. At this position, the pivotal lever 35 is so pivoted as to place the cartridge lock pin 15 out of the cartridge 7. When the disc cartridge 7 is fully inserted into the cartridge holder 4 as illustrated in Fig. 5, the end of the cartridge presses the jaw section 43 of the slide plate in the disc cartridge inserting direction. With this sliding movement of the slide plate 34, the guide pin 39 is shifted to the other end of the elongate slot 46 remote from the pin 44 and by further movement of the slide plate, the pivotal lever 35 is pivotally moved toward the side edge of the disc cartridge 7. As a result, the cartridge lock pin 15 enters into engagement with the pin cut-out 14 to lock the disc cartridge within the cartridge receptacle space in the cartridge holder. As set forth above, at this position the shutter operating arm 10 is locked to be prevented from pivoting back to the initial position by locking engagement between the arm lock pin 23 and the locking edge 31 of the arm lock member 12.

With the shown construction, when the disc cartridge 7 is inserted through the disc cartridge insertion slot 18 of the front plate 17 into the cartridge holder 4, the shutter operating pin 6 engages with the pin cut-out 9 of the shutter 8 placed at the initial fully closed position. As the disc cartridge 7 is advanced within the cartridge holder 4, the shutter operating arm 10 with the shutter operating pin 6 pivots in the shutter opening direction to cause transverse shifting of the shutter to open the disc access window.

At the disc cartridge position in the vicinity of the end of the insertion stroke, the arm lock member 12 comes into engagement with the arm lock pin 23 carried by the shutter operating arm 10 by means of the locking edge 31. By this means the spring force acting on the shutter operating arm 10 due to the spring 26 is not applied to the disc cartridge 7 placed in the cartridge holder. At substantially the same time the cartridge lock mechanism 16 formed by the slide plate 34 and the pivotal lever 35 becomes active to cause pivotal movement of the pivotal lever 35 carrying the cartridge lock pin 15. At the end of pivotal movement of the pivotal lever 35, the cartridge lock pin 15 enters into engagement with the pin receptacle cut-out 14 to establish locking engagement.

Then, the motor 47 is driven to drive the lifter base plate 49 forwardly to cause downward movement of the cartridge holder 4 downwardly biased by the springs 53. During downward movement of the cartridge holder, the extension tongue 25 of the arm lock member 12 comes into contact with the arm lock release member 13. By further downward movement, the arm lock member 12 is resiliently deformed to release the locking engagement between the arm lock pin 23 and the locking edge 31 of the arm lock member 12, at the position adjacent to the end of the downward motion stroke.

As can be appreciated, with the shown construction, the disc cartridge can be stably locked within the cartridge holder 4 without permitting play of the disc cartridge within the cartridge holder. Therefore, stable chucking of the disc can be established.

## Claims

1. A disc drive apparatus to drive a recording medium disc housed within a disc cartridge (7) having a disc access window and a sliding shutter (8) openably closing the disc access window, comprising:
a disc drive mechanism including a disc chucking means to chuck the disc on a turntable (2) rotatably to drive the disc, the disc driving mechanism being mounted on a chassis (3);
a cartridge holder (4) to receive the disc cartridge and convey it between a predetermined unloaded position at which the disc cartridge is externally accessible for insertion and extraction and a loaded position;
a cartridge holder raising and lowering mechanism to shift the cartridge holder (4) between the unloaded and the loaded positions;
a shutter operating means incorporated in the cartridge holder (4) to shift the shutter (8) between an open position in which the disc access opening is exposed for reading and/or writing information thereon, and
a closed position in which the disc access window is blocked, the shutter operating means including a pivotal arm (10) to move the shutter (8) between the open and closed position according to the relative position of the disc cartridge (7) and the cartridge holder (4);
an arm lock means (12,13) incorporated in the cartridge holder to lock the pivotal arm (10) at the position corresponding to the fully open position of the shutter; and
a cartridge lock means (15,16) incorporated in the cartridge holder (4) to lock the disc cartridge (7) within the cartridge holder (4), the cartridge lock means (15,16) being effective so to lock the disc cartridge (7) when the disc cartridge (7) is fully inserted within the cartridge holder (4);
characterised in that the cartridge lock means comprises a slide plate (34) movable in the direction of motion of the disc cartridge (7) within the cartridge holder (4) and depending upon the relative position of the disc cartridge (7) and the cartridge holder (4), and a pivotal lever (35) carrying a cartridge locking pin (15), the pivotal lever (35) cooperating with the slide plate (34) to engage the cartridge locking pin (15) into a locking pin cut-out (14) in the disc cartridge (7) at the fully inserted position of the disc cartridge.

2. A disc drive apparatus according to claim 1, wherein the cartridge lock means (15, 16) cooperates with the pivotal arm (10) so that the pivotal arm (10) can bias the cartridge lock means (15,16) to the position where locking of the disc cartridge (7) is established.

3. A disc drive apparatus according to claim 1, including an arm lock releasing means (13) which is provided on the chassis (3) and acts on the arm lock means (12) while the cartridge holder lifting means is active to shift the cartridge holder (4) from the unloaded position to the loaded position, so that locking of the pivotal arm (10) by the arm lock means (12) is released at the cartridge holder position in the vicinity of the loaded position.

4. A disc drive apparatus according to claim 1, wherein the slide plate (34) cooperates with the pivotal arm (10) of the shutter operating means to be biased to a position to establish locking engagement between the cartridge locking pin (15) and the locking pin cut-out (14) at the locked position of the pivotal arm (10) by the arm lock means (12).

## Patentansprüche

1. Plattenantriebsgerät zum Antreiben einer Aufzeichnungsmediumsplatte, die in einer Plattenkassette (7) untergebracht ist, die ein Plattenzugriffsfenster und eine Gleitblende (8) besitzt, die das Plattenzugriffsfenster öffnen und verschließen kann, mit:
einem Plattenantriebsmechanismus einschließlich einer Platteneinspanneinrichtung, um die Platte auf einem Plattenteller (2) einzuspannen, der drehbar ist, um die Platte anzutreiben, wobei der Plattenantriebsmechanismus auf einem Chassis (3) befestigt ist;
einem Kassettenhalter (4), der die Plattenkassette aufnimmt und diese zwischen einer bestimmten Nicht-Ladeposition, in der die Plattenkassette von außen zum Einführen und Herausnehmen zugänglich ist, und einer Ladeposition befördert;
einem Kassettenhalterhebe- und Absenkmechanismus, um den Kassettenhalter (4) zwischen der Nicht-Ladeposition und der Ladeposition zu verschieben;
einer Blendenbetätigungseinrichtung, die im Kassettenhalter (4) angeordnet ist, um die Blende (8) zwischen einer Öffnungsposition, in welcher die Plattenzugriffsöffnung zum Lesen und/oder Schreiben einer Information offen ist, und einer Schließposition zu verschieben, in welcher das Plattenzugriffsfenster blockiert ist, wobei die Blendenbetätigungseinrichtung einen Dreharm (10) besitzt, um die Blende (8) zwischen der Öffnungs- und der Schließposition in Abhängigkeit von der Relativposition der Plattenkassette (7) und des Kassettenhalters (4) zu verschieben;
einer Armverriegelungseinrichtung (12, 13), die im Kassettenhalter angeordnet ist, um den Dreharm (10) in der Position zu verriegeln, die der vollständig offenen Position der Blende entspricht; und
einer Kassettenverriegelungseinrichtung (15, 16), die im Kassettenhalter (4) angeordnet ist, um die Plattenkassette (7) im Kassettenhalter (4) zu verriegeln, wobei die Kassettenverriegelungseinrichtung (15, 16) so wirkt, daß sie die Plattenkassette (7) verriegelt, wenn die Plattenkassette (7) in den Kassettenhalter (4) vollständig eingeführt ist;
dadurch gekennzeichnet, daß
die Kassettenverriegelungseinrichtung eine Gleitplatte (34) aufweist, die in der Bewegungsrichtung der Plattenkassette (7) im Kassettenhalter (4) und abhängig von der Relativposition der Plattenkassette (7) und des Kassettenhalters (4) verschiebbar ist, und einen Drehhebel (35), der einen Kassettenverriegelungsstift (15) trägt, wobei der Drehhebel (35) mit der Gleitplatte (34) zusammenwirkt, damit der Kassettenverriegelungsstift (15) in einen Verriegelungsstift-Ausschnitt (14) in der Plattenkassette (7) in der vollständig eingeführten Position der Plattenkassette eingreift.

2. Plattenantriebsgerät nach Anspruch 1, wobei die Kassettenverriegelungseinrichtung (15, 16) mit dem Dreharm (10) so zusammenwirkt, daß der Dreharm (10) die Kassettenverriegelungseinrichtung (15, 16) in die Position vorspannen kann, wo die Verriegelung der Plattenkassette (7) eingerichtet ist.

3. Plattenantriebsgerät nach Anspruch 1, die eine Armverriegelungs-Löseeinrichtung (13) aufweist, die auf dem Chassis (3) vorgesehen ist und auf die Armverriegelungseinrichtung (12) einwirkt, während die Kassettenhalterhebeeinrichtung aktiv ist, um den Kassettenhalter (4) von der Nicht-Ladeposition zur Ladeposition zu verschieben, so daß die Verriegelung des Dreharms (10) durch die Armverriegelungseinrichtung (12) in der Kassettenhalterposition in der Nähe der Ladeposition gelöst wird.

4. Plattenantriebsgerät nach Anspruch 1, wobei die Gleitplatte (34) mit dem Dreharm (10) der Blendenbetätigungseinrichtung zusammenwirkt, damit dieser in eine Position vorgespannt wird, um den Verriegelungseingriff zwischen dem Kassettenverriegelungsstift (15) und dem Verriegelungsstift-Ausschnitt (14) in der Verriegelungsposition des Dreharms (10) durch die Armverriegelungseinrichtung (12) einzurichten.

## Revendications

1. Appareil tourne-disque pour entraîner un disque de support d'enregistrement abrité dans une cartouche à disque (7), comportant une fenêtre d'accès au disque et un volet coulissant (8) qui referme la fenêtre d'accès au disque en pouvant l'ouvrir, comprenant :
- un mécanisme d'entraînement de disque qui comprend des moyens de mandrinage de disque pour mandriner le disque sur une table tournante (2) pour entraîner le disque en rotation, le mécanisme d'entraînement de disque étant monté sur un châssis (3) ;
- un porte-cartouche (4) pour recevoir la cartouche à disque et la transporter entre une position de déchargement prédéterminée à laquelle la cartouche à disque est accessible depuis l'extérieur pour introduction et extraction, et une position de chargement ;
- un mécanisme de soulèvement et d'abaissement de porte-cartouche pour faire passer le porte-cartouche (4) entre la position de déchargement et la position de chargement ;
- des moyens d'actionnement de volet incorporés dans le porte-cartouche (4) pour faire passer le volet (8) entre une position ouverte dans laquelle l'ouverture d'accès au disque est exposée pour lire et/ou écrire des informations sur celui-ci, et une position fermée dans laquelle la fenêtre d'accès au disque est bloquée, les moyens d'actionnement de volet comprenant un bras pivotant (10) pour déplacer le volet (8) entre la position ouverte et la position fermée selon la position relative de la cartouche à disque (7) et le porte-cartouche (4) ;
- des moyens de blocage de bras (12, 13) incorporés dans le porte-cartouche pour bloquer le bras pivotant (10) à la position qui correspond à la position totalement ouverte du volet ; et
- des moyens de blocage de cartouche (15, 16) incorporés dans le porte-cartouche (4) pour bloquer la cartouche à disque (7) dans le porte-cartouche (4), les moyens de blocage de cartouche (15, 16) étant effectifs pour bloquer la cartouche à disque (7) lorsque la cartouche à disque (7) est totalement introduite dans le porte-cartouche (4) ;
caractérisé en ce que les moyens de blocage de cartouche comprennent une plaque coulissante (34) mobile dans la direction du mouvement de la cartouche à disque (7) dans le porte-cartouche (4) et selon la position relative de la cartouche à disque (7) et du porte-cartouche (4), et un levier pivotant (35) qui porte une tige de blocage de cartouche (15), le levier pivotant (35) coopérant avec la plaque coulissante (34) pour engager la tige de blocage de cartouche (15) dans une découpe correspondante (14) dans la cartouche à disque (7) à la position totalement introduite de la cartouche à disque.

2. Appareil tourne-disque selon la revendication 1, dans lequel les moyens de blocage de cartouche (15, 16) coopèrent avec le bras pivotant (10) de sorte que le bras pivotant (10) peut solliciter les moyens de blocage de cartouche (15, 16) jusqu'à la position à laquelle le blocage de la cartouche à disque (7) est établi.

3. Appareil tourne-disque selon la revendication 1, comprenant des moyens de libération du blocage du bras (13), qui sont prévus sur le châssis (3) et qui agissent sur les moyens de blocage du bras (12), tandis que les moyens de soulèvement du porte-cartouche sont actifs pour déplacer le porte-cartouche (4) depuis la position de déchargement jusqu'à la position de chargement, de sorte que le blocage du bras pivotant (10) par les moyens de blocage de bras (12) est relâché à la position du porte-cartouche dans le voisinage de la position de chargement.

4. Appareil tourne-disque selon la revendication 1, dans lequel la plaque coulissante (34) coopère avec le bras pivotant (10) des moyens d'actionnement de volet, pour être repoussée jusqu'à une position pour établir un engagement de blocage entre la tige de blocage de cartouche (15) et la découpe correspondante (14) à la position de blocage du bras pivotant (10) par les moyens de blocage de bras (12).
